# FASCICULE DE BREVET EUROPEEN

(11) **EP 3 500 142 B1**
(45) Date de publication et mention de la délivrance du brevet: **27.05.2020**
(21) Numéro de dépôt: 17754746.0
(22) Date de dépôt: 21.07.2017
(51) Int. Cl.: A47J 37/06, A47J 37/12

(54) **APPAREIL ÉLECTRIQUE DE CUISSON POUR LA PRÉPARATION D'ALIMENTS FRITS**
ELEKTRISCHES KOCHGERÄT ZUR HERSTELLUNG VON FRITTIERTEN LEBENSMITTELN
ELECTRIC COOKING APPLIANCE FOR PREPARING FRIED FOOD

(30) Priorité: 22.08.2016 FR 1657848
(43) Date de publication de la demande: 26.06.2019
(73) Titulaire: SEB S.A., 69130 Ecully (FR)
(72) Inventeur: SEURAT, Frédéric, 21490 Bretigny (FR)
(74) Mandataire: Soares, Luis Filipe
(86) Numéro de dépôt international: PCT/FR2017/052022
(87) Numéro de publication internationale: WO 2018/037177

(56) Documents cités:
- US-A1- 2003 205 569
- US-A1- 2015 292 750

## Description

La présente invention concerne le domaine technique des appareils électriques de cuisson prévus pour la préparation d'aliments frits.

Il est connu de préparer des aliments frits avec un appareil électrique de cuisson comportant un espace de cuisson exposé à un flux d'air chaud. Un tel appareil permet notamment d'obtenir assez rapidement des aliments frits prêts à être consommés, notamment à partir d'aliments pré-frits.

Il est connu du document US-A-2003/0205569 un appareil électrique de cuisson comprenant :
- une base dans laquelle est ménagée au moins une partie d'un espace de cuisson,
- des moyens de ventilation agencés pour créer un flux d'air dans l'espace de cuisson,
- des moyens de chauffage agencés pour chauffer le flux d'air,
- un panier de cuisson amovible agencé pour recevoir des aliments à cuire dans l'espace de cuisson,
- une cuve amovible prévue pour recevoir un bain de cuisson,
- un boîtier amovible à partir duquel s'étend un élément chauffant, le boîtier étant prévu pour être disposé sur la base pour cuire les aliments disposés dans la cuve, l'élément chauffant s'étendant alors à l'intérieur de la cuve. Toutefois les appareils de ce type restent peu performants pour la cuisson de beignets ou de préparations panées.

Un objet de la présente invention est de proposer un appareil du type précité qui soit également performant pour la cuisson de beignets ou de préparations panées.

Un autre objet de la présente invention est de proposer un appareil électrique de cuisson qui permette de préparer de manière satisfaisante une plus grande variété d'aliments, notamment d'aliments frits.

Ces objets sont atteints avec un appareil électrique de cuisson du type précité comprenant un autre boîtier amovible logeant les moyens de ventilation et les moyens de chauffage, l'autre boîtier étant prévu pour être disposé sur la base pour cuire les aliments disposés dans le panier de cuisson.
Ainsi selon le type d'aliment frit à préparer le mode de cuisson le plus adapté peut être sélectionné, en utilisant le boîtier pour une cuisson en bain d'huile ou l'autre boîtier pour une cuisson à air chaud.

Selon une forme de réalisation, la cuve est utilisée en substitution au panier de cuisson. En d'autres termes le panier de cuisson est utilisé avec l'autre boîtier et la cuve est utilisée avec le boîtier.

Si désiré le panier de cuisson peut être configuré pour pouvoir être agencé dans la cuve pour contenir les aliments à cuire. Le panier de cuisson agencé dans la cuve s'étend alors de préférence au dessus de l'élément chauffant lorsque l'appareil est utilisé avec le boîtier.

Avantageusement, la base comporte un logement prévu pour recevoir au moins partiellement la cuve et/ou le panier de cuisson. Cette disposition permet de simplifier la construction de l'appareil.

Avantageusement alors, le panier de cuisson est logé au moins en partie dans la base lorsque l'appareil est utilisé avec l'autre boîtier.

Avantageusement alors, la cuve est logée au moins en partie dans la base lorsque l'appareil est utilisé avec le boîtier.

Avantageusement encore, le logement présente une ouverture supérieure.

Selon une forme de réalisation, la base comporte un connecteur électrique, pour alimenter électriquement les moyens de chauffage et les moyens de ventilation lorsque l'autre boîtier est disposé sur la base, et pour alimenter électriquement l'élément chauffant lorsque le boîtier est disposé sur la base. La base est alors alimentée par un cordon d'alimentation électrique. En alternative, l'autre boîtier peut être directement alimenté par un cordon d'alimentation électrique et/ou le boîtier peut être directement alimenté par un cordon d'alimentation électrique.

Selon une forme de réalisation, l'appareil électrique de cuisson comprend un couvercle disposé sur la base, et l'espace de cuisson est défini par l'autre boîtier et le couvercle disposés sur la base.

Selon une autre forme de réalisation l'espace de cuisson est défini par l'autre boîtier disposé sur la base. L'utilisation d'un couvercle n'est alors pas nécessaire.

Selon une forme de réalisation, l'autre boîtier présente une tuyère d'admission agencée en amont des moyens de ventilation, la base comporte une zone d'admission agencée en regard de la tuyère d'admission, et l'espace de cuisson communique avec la zone d'admission. Cette disposition permet de faciliter la circulation du flux d'air dans l'espace de cuisson.

Avantageusement alors, les moyens de ventilation sont agencés au dessus de la zone d'admission. Cette disposition permet d'améliorer la circulation du flux d'air.

Selon une forme de réalisation, les moyens de chauffage sont agencés en aval des moyens de ventilation. Cette disposition permet de simplifier la réalisation des moyens de ventilation.

Avantageusement alors, l'autre boîtier comprend une zone d'échappement agencée en aval des moyens de ventilation, et les moyens de chauffage sont agencés dans la zone d'échappement.

Avantageusement encore, le panier de cuisson est agencé en aval des moyens de chauffage.

Avantageusement encore, les moyens de chauffage sont agencés au moins partiellement en regard des aliments à cuire reçus par le panier de cuisson. Cette disposition permet de faciliter une cuisson par rayonnement.

Avantageusement encore, l'autre boîtier comporte au moins une sortie d'air chauffé débouchant en regard du panier de cuisson. Cette disposition contribue à de bonnes performances de cuisson.

Avantageusement encore, le flux d'air traverse un lit d'aliments à cuire disposé dans le panier de cuisson. Cette disposition permet de favoriser une meilleure homogénéité de cuisson.

Avantageusement alors, le panier de cuisson présente un fond ajouré permettant le passage du flux d'air.

L'invention sera mieux comprise à l'étude d'un mode de réalisation donné à titre d'exemple nullement limitatif et illustré par les figures annexées, dans lesquelles :
- la figure 1 est une vue schématique en coupe verticale et en éclaté d'un appareil électrique de cuisson selon la présente invention,
- la figure 2 est une vue schématique en coupe verticale de l'appareil électrique de cuisson de la figure 1 selon une première configuration d'utilisation.

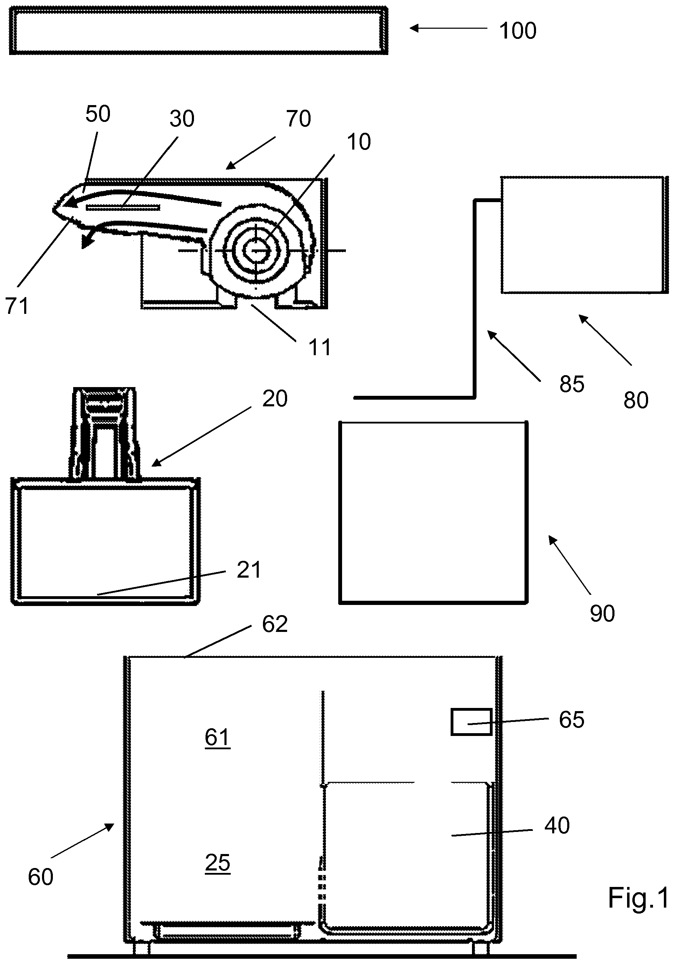

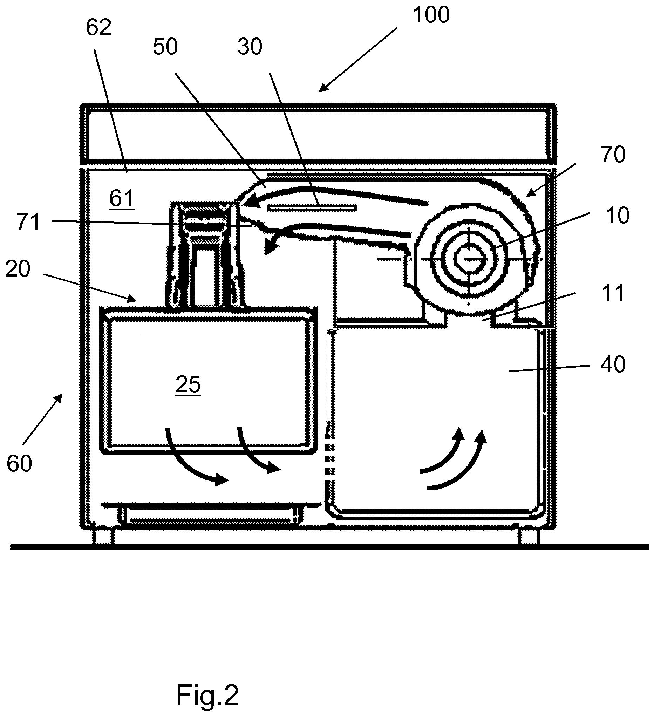

- la figure 2 est une vue schématique en coupe verticale de l'appareil électrique de cuisson de la figure 1 selon une deuxième configuration d'utilisation.

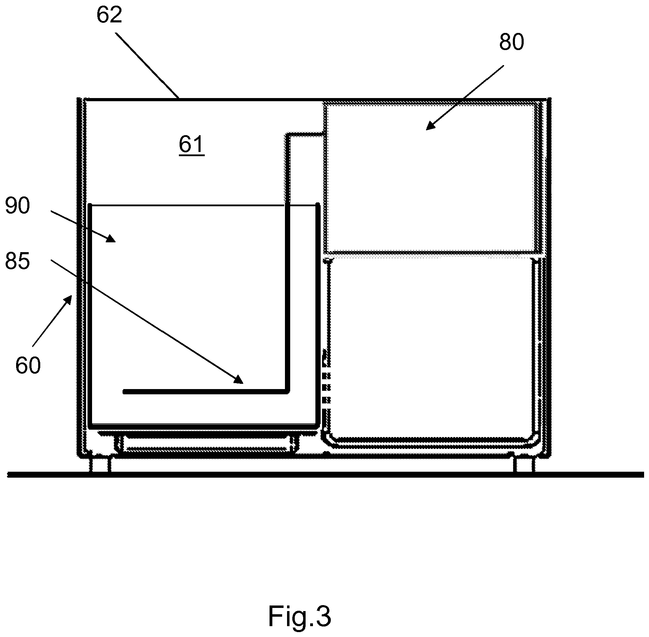

L'appareil électrique de cuisson illustré sur la figure 1 comprend une base 60 dans laquelle est ménagée au moins une partie d'un espace de cuisson 25, un boîtier 80 amovible prévu pour être utilisé dans une deuxième configuration d'utilisation illustré sur la figure 3, un autre boîtier 70 amovible prévu pour être utilisé dans une première configuration d'utilisation illustré sur la figure 2, un panier de cuisson 20 amovible, une cuve 90 amovible, et un couvercle 100.

La base 60 comporte un logement 61 prévu pour recevoir au moins partiellement la cuve 90 et/ou le panier de cuisson 20.

Dans l'exemple de réalisation illustré sur les figures 1 à 3, le logement 61 présente une ouverture supérieure 62. Le panier de cuisson 20 est logé dans la base 60 lorsque l'appareil est utilisé avec l'autre boîtier 70, tel que représenté sur la figure 2. La cuve 90 est logée dans la base 60 lorsque l'appareil est utilisé avec le boîtier 80, tel que représenté sur la figure 3.

L'autre boîtier 70 est prévu pour être disposé sur la base 60 pour cuire les aliments disposés dans le panier de cuisson 20 agencé dans l'espace de cuisson 25. L'autre boîtier 70 loge des moyens de ventilation 10 agencés pour créer un flux d'air dans l'espace de cuisson 25, et des moyens de chauffage 30 agencés pour chauffer le flux d'air.

Le boîtier 80 est prévu pour être disposé sur la base 60 pour cuire les aliments disposés dans la cuve 90 portée par la base 60. Un élément chauffant 85 s'étend à partir du boîtier 80. Tel que montré sur la figure 3, l'élément chauffant 85 s'étend à l'intérieur de la cuve 90. L'élément chauffant 85 est prévu pour chauffer le bain de cuisson disposé dans la cuve 90. Le bain de cuisson peut notamment être un bain d'huile. L'élément chauffant 85 est de préférence associé à des moyens de régulation thermostatique et/ou à des moyens de protection thermique, non représentés sur les figures.

Dans l'exemple de réalisation illustré sur les figures 1 à 3, la base 60 peut porter le panier de cuisson 20 ou la cuve 30. Ainsi la cuve 30 est utilisée en substitution au panier de cuisson 20. En alternative, le panier de cuisson 20 pourrait notamment être porté par la cuve 30. Le panier de cuisson 20 s'étend alors de préférence au dessus de l'élément chauffant 85 lorsque l'appareil est utilisé avec le boîtier 80.

Tel que représenté sur la figure 1, le couvercle 100 est disposé sur la base 60. L'espace de cuisson 25 est alors défini par l'autre boîtier 70 et le couvercle 100 disposés sur la base 60, tel que représenté sur la figure 2.

Dans l'exemple de réalisation illustré sur les figures, la base 60 comporte un connecteur électrique 65 pour alimenter électriquement les moyens de chauffage 30 et les moyens de ventilation 10 lorsque l'autre boîtier 70 est disposé sur la base 60 et pour alimenter électriquement l'élément chauffant 85 lorsque le boîtier 80 est disposé sur la base 60. A cet effet, l'autre boîtier 70 et le boîtier 80 comportent chacun un autre connecteur électrique, non représenté sur les figures, alimenté par le connecteur 65 lorsque l'autre boîtier 70 ou le boîtier 80 est disposé sur la base 60.

L'appareil dans la configuration illustrée sur la figure 2 est prévu pour chauffer ou cuire des aliments avec un flux d'air chaud.

Dans l'exemple de réalisation illustré, les moyens de ventilation 10 comprennent un ventilateur à flux transversal comprenant un rotor agencé pour tourner autour d'un axe de rotation 12 perpendiculaire au plan des figures 1 et 2. L'autre boîtier 70 présente une tuyère d'admission 11 agencée en amont des moyens de ventilation 10. La base 60 comporte une zone d'admission 40 agencée en regard de la tuyère d'admission 11. L'espace de cuisson 25 communique avec la zone d'admission 40. Les moyens de chauffage 30 sont agencés en aval des moyens de ventilation 10. L'autre boîtier 70 comporte au moins une sortie d'air chauffé 71 débouchant en regard du panier de cuisson 20. Le panier de cuisson 20 est ainsi agencé en aval des moyens de chauffage 30.

Plus particulièrement dans l'exemple de réalisation illustré, les moyens de ventilation 10 sont agencés sur un côté de l'espace de cuisson 25. Les moyens de ventilation 10 sont agencés au dessus de la zone d'admission 40. L'autre boîtier 70 comprend une zone d'échappement 50 agencée en aval des moyens de ventilation 10. Les moyens de chauffage 30 sont agencés dans la zone d'échappement 50.

De manière préférée, les moyens de chauffage 30 sont agencés au moins partiellement en regard des aliments à cuire reçus par le panier de cuisson 20, ce qui permet d'exposer les aliments à cuire à un rayonnement thermique généré par les moyens de chauffage 30 pour les dorer / griller.

Pour des raisons de clarté, les aliments à cuire ne sont pas représentés dans le panier de cuisson 20, afin de visualiser le flux d'air généré par les moyens de ventilation. Les moyens de ventilation 10 disposés dans l'autre boîtier 70 aspirent de l'air par la tuyère d'admission 11 dans la zone d'admission 40, et rejettent l'air dans la zone d'échappement 50 définie par l'autre boîtier 70 qui contient aussi les moyens de chauffage 30. Les moyens de chauffage 30 chauffent donc le flux d'air qui sort des moyens de ventilation 10. Le flux d'air chauffé est ensuite dirigé vers le panier de cuisson 20 par la sortie d'air chauffé 71.

Le flux d'air traverse un lit d'aliments à cuire (non représenté sur les figures) disposé dans le panier de cuisson 20. A cet effet le panier de cuisson 20 présente un fond ajouré 21 permettant le passage du flux d'air. Selon une forme de réalisation préférée le fond ajouré 21 est réalisé en forme de grille.

Une fois le fond ajouré 21 passé, le flux d'air est aspiré vers la zone d'admission 40 afin de passer à nouveau à travers les moyens de ventilation 10. Si désiré le couvercle 100 peut présenter une face inférieure conformée pour diriger le flux d'air sur le panier de cuisson 20.

L'appareil électrique de cuisson selon l'invention peut servir à cuire rapidement des pommes de terre découpées pour faire des frites en les enduisant initialement d'une faible quantité d'huile ou de matière grasse, dans la configuration représentée sur la figure 2. On peut également envisager de cuire d'autres aliments, tels que de la viande ou d'autres légumes.

L'appareil dans la configuration illustrée sur la figure 3 est prévu pour cuire des aliments dans un bain de cuisson, notamment pour frire des aliments dans un bain de matière grasse.

La cuve 90 est disposée dans la base 60 après avoir retiré le couvercle 100, l'autre boîtier 70 et le panier de cuisson 20. Le boîtier 80 est ensuite disposé sur la base 60. L'utilisateur remplit ensuite la cuve 90 de la quantité appropriée de bain de cuisson. En l'absence d'échappements de vapeur la cuisson des aliments s'effectue sans couvercle 100.

L'appareil électrique de cuisson selon l'invention peut également permettre de frire de manière satisfaisante des préparations panées ou des beignets, dans la configuration représentée sur la figure 3. On peut également envisager de frire d'autres aliments, tels que notamment des pommes de terre.

A titre de variante, le couvercle 100 ne s'étend pas nécessairement au dessus de l'autre boîtier 70.

A titre de variante, l'appareil ne comporte pas nécessairement un couvercle 100 indépendant. L'autre boîtier 70 peut notamment former un couvercle disposé sur la base 60. L'espace de cuisson 25 est alors défini par l'autre boîtier 70 disposé sur la base 60.

A titre de variante, les moyens de ventilation 10 ne comprennent pas nécessairement un ventilateur à flux transversal.

A titre de variante, l'autre boîtier 70 ne présente pas nécessairement présente une tuyère d'admission 11 agencée en amont des moyens de ventilation 10.

A titre de variante, le panier de cuisson 20 peut être logé au moins en partie dans la base 60 lorsque l'appareil est utilisé avec l'autre boîtier 70.

A titre de variante, le panier de cuisson 20 n'est pas nécessairement retiré par l'ouverture supérieure 62. La base 60 peut notamment comporter une ouverture latérale prévue pour la mise en place et le retrait du panier de cuisson 20.

A titre de variante, la cuve 90 peut être logée au moins en partie dans la base 60 lorsque l'appareil est utilisé avec le boîtier 80.

La présente invention n'est nullement limitée à l'exemple de réalisation décrit et à ses variantes, mais englobe de nombreuses modifications dans le cadre des revendications.

## Revendications

1. Appareil électrique de cuisson comprenant :
- une base (60) dans laquelle est ménagée au moins une partie d'un espace de cuisson (25),
- des moyens de ventilation (10) agencés pour créer un flux d'air dans l'espace de cuisson (25),
- des moyens de chauffage (30) agencés pour chauffer le flux d'air,
- un panier de cuisson (20) amovible agencé pour recevoir des aliments à cuire dans l'espace de cuisson (25),
- une cuve (90) amovible prévue pour recevoir un bain de cuisson,
- un boîtier (80) amovible à partir duquel s'étend un élément chauffant (85), le boîtier (80) étant prévu pour être disposé sur la base (60) pour cuire les aliments disposés dans la cuve (90), l'élément chauffant (85) s'étendant alors à l'intérieur de la cuve (90),
**caractérisé en ce qu'**il comprend :
- un autre boîtier (70) amovible logeant les moyens de ventilation (10) et les moyens de chauffage (30), l'autre boîtier (70) étant prévu pour être disposé sur la base (60) pour cuire les aliments disposés dans le panier de cuisson (20).

2. Appareil électrique de cuisson selon la revendication 1, **caractérisé en ce que** la base (60) comporte un logement (61) prévu pour recevoir au moins partiellement la cuve (90) et/ou le panier de cuisson (20).

3. Appareil électrique de cuisson selon la revendication 2, **caractérisé en ce que** le logement (61) présente une ouverture supérieure (62).

4. Appareil électrique de cuisson selon l'une des revendications 1 à 3, **caractérisé en ce que** la base (60) comporte un connecteur électrique (65), pour alimenter électriquement les moyens de chauffage (30) et les moyens de ventilation (10) lorsque l'autre boîtier (70) est disposé sur la base (60), et pour alimenter électriquement l'élément chauffant (85) lorsque le boîtier (80) est disposé sur la base (60).

5. Appareil électrique de cuisson selon l'une des revendications 1 à 4, **caractérisé en ce qu'**il comprend un couvercle (100) disposé sur la base (60), et **en ce que** l'espace de cuisson (25) est défini par l'autre boîtier (70) et le couvercle (100) disposés sur la base (60).

6. Appareil électrique de cuisson selon l'une des revendications 1 à 4, **caractérisé en ce que** l'espace de cuisson (25) est défini par l'autre boîtier (70) disposé sur la base (60).

7. Appareil électrique de cuisson selon l'une des revendications 1 à 6, **caractérisé en ce que** l'autre boîtier (70) présente une tuyère d'admission (11) agencée en amont des moyens de ventilation (10), **en ce que** la base (60) comporte une zone d'admission (40) agencée en regard de la tuyère d'admission (11), et **en ce que** l'espace de cuisson (25) communique avec la zone d'admission (40).

8. Appareil électrique de cuisson selon la revendication 7, **caractérisé en ce que** les moyens de ventilation (10) sont agencés au dessus de la zone d'admission (40).

9. Appareil électrique de cuisson selon l'une des revendications 1 à 8, **caractérisé en ce que** les moyens de chauffage (30) sont agencés en aval des moyens de ventilation (10).

10. Appareil électrique de cuisson selon la revendication 9, **caractérisé en ce que** l'autre boîtier (70) comprend une zone d'échappement (50) agencée en aval des moyens de ventilation (10), et **en ce que** les moyens de chauffage (30) sont agencés dans la zone d'échappement (50).

11. Appareil électrique de cuisson selon l'une des revendications 1 à 10, **caractérisé en ce que** le panier de cuisson (20) est agencé en aval des moyens de chauffage (30).

12. Appareil de cuisson selon l'une des revendications 1 à 11, **caractérisé en ce que** les moyens de chauffage (30) sont agencés au moins partiellement en regard des aliments à cuire reçus par le panier de cuisson (20).

13. Appareil électrique de cuisson selon l'une des revendications 1 à 12, **caractérisé en ce que** l'autre boîtier (70) comporte au moins une sortie d'air chauffé (71) débouchant en regard du panier de cuisson (20).

14. Appareil de cuisson selon l'une des revendications 1 à 13, **caractérisé en ce que** le flux d'air traverse un lit d'aliments à cuire disposé dans le panier de cuisson (20).

15. Appareil de cuisson selon l'une des revendications 1 à 14, **caractérisé en ce que** le panier de cuisson (20) présente un fond ajouré (21) permettant le passage du flux d'air.

## Patentansprüche

1. Elektrisches Kochgerät, umfassend:
- eine Basis (60), in der mindestens ein Teil eines Kochraums (25) untergebracht ist,
- Belüftungsmittel (10), die eingerichtet sind, um einen Luftstrom in dem Kochraum (25) zu erzeugen,
- Heizmittel (30), die eingerichtet sind, um den Luftstrom zu erwärmen,
- einen herausnehmbaren Kochkorb (20), der eingerichtet ist, um Lebensmittel, die gekocht werden sollen, in dem Kochraum (25) aufzunehmen,
- ein abnehmbares Gefäß (90), das vorgesehen ist, um ein Kochbad aufzunehmen,
- ein abnehmbares Gehäuse (80), ausgehend von dem sich ein Heizelement (85) erstreckt, wobei das Gehäuse (80) vorgesehen ist, um auf der Basis (60) angeordnet zu sein, um die Lebensmittel zu kochen, die in dem Gefäß (90) angeordnet sind, wobei sich das Heizelement (85) somit in das Innere des Gefäßes (90) erstreckt,
**dadurch gekennzeichnet, dass** es umfasst:
- ein weiteres, abnehmbares Gehäuse (70), in dem das Belüftungsmittel (10) und das Heizmittel (30) untergebracht sind, wobei das weitere Gehäuse (70) vorgesehen ist, um auf der Basis (60) angeordnet zu sein, um Lebensmittel, die in den Kochkorb (20) angeordnet sind, zu kochen.

2. Elektrisches Kochgerät nach Anspruch 1, **dadurch gekennzeichnet, dass** die Basis (60) eine Aufnahme (61) aufweist, die vorgesehen ist, um das Gefäß (90) und / oder den Kochkorb (20) zumindest teilweise aufzunehmen.

3. Elektrisches Kochgerät nach Anspruch 2, **dadurch gekennzeichnet, dass** das Gehäuse (61) eine obere Öffnung (62) vorweist.

4. Elektrisches Kochgerät nach einem der Ansprüche 1 bis 3, **dadurch gekennzeichnet, dass** die Basis (60) einen elektrischen Verbinder (65) zur elektrischen Versorgung der Heizmittel (30) und der Belüftungsmittel (10), wenn das weitere Gehäuse (70) auf der Basis (60) angeordnet ist, und zur elektrischen Versorgung des Heizelements (85), wenn das Gehäuse (80) auf der Basis (60) angeordnet ist, aufweist.

5. Elektrisches Kochgerät nach einem der Ansprüche 1 bis 4, **dadurch gekennzeichnet, dass** es eine Abdeckung (100) umfasst, die auf der Basis (60) angeordnet ist, und dass der Kochraum (25) durch das Gehäuse (70) und die Abdeckung (100), die auf der Basis (60) angeordnet sind, definiert ist.

6. Elektrisches Kochgerät nach einem der Ansprüche 1 bis 4, **dadurch gekennzeichnet, dass** der Kochraum (25) durch das weitere Gehäuse (70), das auf der Basis (60) angeordnet ist, definiert ist.

7. Elektrisches Kochgerät nach einem der Ansprüche 1 bis 6, **dadurch gekennzeichnet, dass** das Gehäuse (70) eine Einlassdüse (11) vorweist, die stromaufwärts der Belüftungsmittel (10) angeordnet ist, dass die Basis (60) eine Einlasszone (40) aufweist, die gegenüber der Einlassdüse (11) angeordnet ist, und dass der Kochraum (25) mit der Einlasszone (40) in Verbindung steht.

8. Elektrisches Kochgerät nach Anspruch 7, **dadurch gekennzeichnet, dass** die Belüftungsmittel (10) oberhalb der Einlasszone (40) angeordnet sind.

9. Elektrisches Kochgerät nach einem der Ansprüche 1 bis 8, **dadurch gekennzeichnet, dass** die Heizmittel (30) stromabwärts der Belüftungsmittel (10) angeordnet sind.

10. Elektrisches Kochgerät nach Anspruch 9, **dadurch gekennzeichnet, dass** das weitere Gehäuse (70) eine Entlüftungszone (50) umfasst, die stromabwärts der Belüftungsmittel (10) angeordnet ist, und dass die Heizmittel (30) in der Entlüftungszone (50) angeordnet sind.

11. Elektrisches Kochgerät nach einem der Ansprüche 1 bis 10, **dadurch gekennzeichnet, dass** der Kochkorb (20) stromabwärts der Heizmittel (30) angeordnet ist.

12. Kochgerät nach einem der Ansprüche 1 bis 11, **dadurch gekennzeichnet, dass** die Heizmittel (30) zumindest teilweise gegenüber den zu kochenden Lebensmitteln angeordnet sind, die von dem Kochkorb (20) aufgenommen sind.

13. Elektrisches Kochgerät nach einem der Ansprüche 1 bis 12, **dadurch gekennzeichnet, dass** das weitere Gehäuse (70) mindestens einen beheizten Luftauslass (71) aufweist, der gegenüber dem Kochkorb (20) mündet.

14. Kochgerät nach einem der Ansprüche 1 bis 13, **dadurch gekennzeichnet, dass** der Luftstrom durch ein Bett von zu kochenden Lebensmitteln strömt, das in dem Kochkorb (20) angeordnet ist.

15. Kochgerät nach einem der Ansprüche 1 bis 14, **dadurch gekennzeichnet, dass** der Kochkorb (20) einen perforierten Boden (21) vorweist, der den Durchgang des Luftstroms ermöglicht.

## Claims

1. Electric cooking appliance comprising:
- a base (60) in which at least a portion of a cooking space (25) is arranged,
- ventilation means (10) arranged to create an airflow in the cooking space (25),
- heating means (30) arranged to heat the airflow,
- a removable cooking basket (20) arranged to receive foods to be cooked in the cooking space (25),
- a removable container (90) arranged to receive a cooking bath,
- a removable housing (80) from which extends a heating element (85), the housing (80) being designed to be arranged on the base (60) in order to cook the foods arranged in the container (90), the heating element (85) then extending inside the container (90),
**characterised in that** it comprises:
another removable housing (70) supporting the ventilation means (10) and the heating means (30), the other housing (70) being designed to be arranged on the base (60) in order to cook the foods arranged in the cooking basket (20).

2. Electric cooking appliance according to claim 1, **characterised in that** the base (60) comprises a seating (61) designed to receive at least partially the container (90) and/or the cooking basket (20).

3. Electric cooking appliance according to claim 2, **characterised in that** this seating (61) has an upper opening (62).

4. Electric cooking appliance according to claims 1 to 3, **characterised in that** the base (60) comprises an electric connector (65), in order to electrically power the heating means (30) and the ventilation means (10) when the other housing (70) is arranged on the base (60), and to electrically power the heating element (85) when the housing (80) is arranged on the base (60).

5. Electric cooking appliance according to claims 1 to 4, **characterised in that** it comprises a lid (100) arranged on the base (60), and **in that** the cooking space (25) is defined by the other housing (70) and the lid (100) arranged on the base (60).

6. Electric cooking appliance according to claims 1 to 4, **characterised in that** the cooking space (25) is defined by the other housing (70) arranged on the base (60).

7. Electric cooking appliance according to claims 1 to 6, **characterised in that** the other housing (70) comprises an intake nozzle (11) arranged upstream of the ventilation means (10), **in that** the base (60) comprises an intake area (40) arranged opposite the intake nozzle (11), and **in that** the cooking space (25) communicates with the intake area (40).

8. Electric cooking appliance according to claim 7, **characterised in that** the ventilation means (10) are arranged over the intake area (40).

9. Electric cooking appliance according to claims 1 to 8, **characterised in that** the heating means (30) are arranged downstream of the ventilation means (10).

10. Electric cooking appliance according to claim 9, **characterised in that** the other housing (70) comprises an exhaust area (50) arranged downstream of the ventilation means (10), and **in that** the heating means (30) are arranged in the exhaust area (50).

11. Electric cooking appliance according to claims 1 to 10, **characterised in that** the cooking basket (20) is arranged downstream of the heating means (30).

12. Electric cooking appliance according to claims 1 to 11, **characterised in that** the heating means (30) are arranged at least partially opposite the foods to be cooked that are received by the cooking basket (20).

13. Electric cooking appliance according to claims 1 to 12, **characterised in that** the other housing (70) comprises at least one heated air outlet (71) discharging opposite the cooking basket (20).

14. Electric cooking appliance according to claims 1 to 13, **characterised in that** the airflow passes through a bed of foods to be cooked arranged in the cooking basket (20).

15. Electric cooking appliance according to claims 1 a 14, **characterised in that** the cooking basket (20) has a perforated bottom (21) allowing the passage of the airflow.
